(19) Europäisches Patentamt

European Patent Office

Office européen des brevets

(11) **EP 1 536 988 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***B60R 21/01*** (2006.01)

(21) Anmeldenummer: 03790794.6

(22) Anmeldetag: **09.07.2003**

(86) Internationale Anmeldenummer:
**PCT/EP2003/007374**

(87) Internationale Veröffentlichungsnummer:
**WO 2004/020255 (11.03.2004 Gazette 2004/11)**

(54) **VERFAHREN UND VORRICHTUNG ZUR IDENTIFIKATION DER ART DER BELEGUNG EINER AUFLAGEFLÄCHE**

METHOD AND DEVICE FOR IDENTIFYING THE TYPE OF OCCUPANCY OF A SUPPORTING SURFACE

PROCEDE ET DISPOSITIF D'IDENTIFICATION DU TYPE D'OCCUPATION D'UNE SURFACE SUPPORT

(84) Benannte Vertragsstaaten:
**CH FR GB LI**

(30) Priorität: **29.08.2002 DE 10239761**

(43) Veröffentlichungstag der Anmeldung:
**08.06.2005 Patentblatt 2005/23**

(73) Patentinhaber: **SARTORIUS AG
37075 Göttingen (DE)**

(72) Erfinder:
• **BETTWIESER, Erich
 37083 Göttingen (DE)**
• **MAAZ, Günther
 37170 Uslar (DE)**

(56) Entgegenhaltungen:
**WO-A-01/12473          WO-A-01/18507
WO-A-02/30717          WO-A-95/24616**

EP 1 536 988 B1

**Beschreibung**

Die Erfindung betrifft ein Verfahren zur Identifikation der Art der Belegung einer Auflagefläche, insbesondere eines Kraftfahrzeugsitzes, mit Hilfe kraftsensorgestützter Signale.

Die Erfindung betrifft weiterhin eine Vorrichtung zur Identifikation der Art der Belegung einer Auflagefläche, insbesondere eines Kraftfahrzeugsitzes, bei der an der Auflagefläche mindestens drei Kraftsensoren oder mindestens eine Drehachse in Verbindung mit mindestens einem Kraftsensor angeordnet sind, über die, mit einer mit den Sensoren verbundenen Messelektronik, auf die Auflagefläche einwirkende Kräfte messbar sind, und bei der, über eine mit der Messelektronik verbundenen Steuereinheit, eine Einrichtung in Abhängigkeit der Messwerte ansteuerbar ist.

Die spezifische Erkennung und Unterscheidung von Lasten auf Auflageflächen, wie beispielsweise Sitze, Liegen oder Ladeflächen, ist ein Entwicklungsziel der modernen Wägetechnik, dass mittlerweile über diesen Bereich hinaus zunehmende Bedeutung, beispielsweise in der Fahrzeugtechnik, erlangt hat.

In Kraftfahrzeugen soll aus Sicherheitsgründen und zur Vermeidung von Verletzungen ein Airbag im Falle einer Kollision nicht oder nur mit einer reduzierten Stärke entfaltet, bzw. aufgeblasen werden, wenn der betroffene Fahrzeugsitz mit einem Kindersitz und einem Kind belegt ist.

Dazu ist es bekannt, in der Sitzfläche Kraftsensoren anzuordnen, die eine Gewichtsmessung durchführen und aus dem gemessenen Gesamtgewicht auf die Art der Belegung zu schließen. Das Messergebnis kann von einer Airbagsteuereinheit verwendet werden.

Problematisch dabei ist, dass durch die übliche Befestigung des Kindersitzes mit dem Sicherheitsgurt die Steuerung irregeführt werden kann. Der Sicherheitsgurt erzeugt bei der Befestigung des Kindersitzes durch eine Gurtstraffung erhöhte Kräfte, die den eingebauten Sensoren höhere Gewichtskräfte signalisieren, als dem tatsächlichen Gewicht des Kindes mit dem Kindersitz entsprechen. Dadurch kann die Airbagsteuerung fälschlicherweise von einer Sitzbelegung mit einem leichten Erwachsenen anstelle von der eines Kindes ausgehen. Im Kollisionsfalle würde dann der Airbag normal ausgelöst, obwohl der Sitz mit einem Kindersitz und einem Kind belegt ist. Es sind sogar Gurtkräfte von 100 kg bei einer Kindersitzbefestigung möglich, so dass eine Unterscheidung zwischen Erwachsenem und Kindersitz nur aufgrund der gemessenen Masse, mit der der Sitz belegt ist, gänzlich unmöglich wird. Insbesondere bei Gurtstraffungen im Zusammenhang mit einer elektrischen Höhenverstellung des Fahrzeugsitzes nach dem Festschnallen des Kindersitzes sind diese hohen Gurtkräfte von 100 kg nicht ungewöhnlich. Weiterhin sind auch Kindersitzmodelle auf dem Markt, die durch ihr hohes Eigengewicht mit einem Kind zusammen, selbst bei nicht oder nur schwach verzurrtem Gurt, durchaus in den Gewichtsbereich des aus der Kraftfahrzeugtechnik bekannten Begriffes der "5%-Frau" gelangen, so dass eine Unterscheidung aufgrund der Belegungsmasse nicht möglich ist.

Eine verbesserte Methode zur Bestimmung des tatsächlichen Belegungsgewichtes eines Kraftfahrzeugsitzes ist aus der WO 01/18507 A1 (Verfahren und Vorrichtung zur Messung von Sitzbelegungsgewichten) bekannt. Dabei wird neben dem Gesamtgewicht der Gewichtsschwerpunkt, bzw. die Massenverteilung auf der Sitzfläche ausgenutzt. Dazu sind im Sitz 4 Kraftsensoren, jeweils ein Sensor im Bereich einer Sitzflächenecke, integriert. Die Methode geht davon aus, dass die erhöhte Gurtstraffung bei der Kindersitzbefestigung, im Gegensatz zu der Belegung und Gurtanlegung durch eine erwachsene Person, zu einer Asymmetrie der Gewichtsverteilung im Bereich des zu der Gurthalterung benachbarten Sensors führt. In Richtung der Gurthalterung ist dann ein erhöhter Kraftvektor gerichtet. Überschreitet eine gemessene Asymmetrie in Bezug auf das Gesamtgewicht einen vorgegebenen Grenzwert, wird ein Kompensationsfaktor errechnet und damit das gemessene Gesamtgewicht nach unten korrigiert. Dadurch soll eine Fehlsteuerung eines Airbagsystems vermieden werden. In einer bevorzugten Ausführungsform gelten für den Korrekturfaktor feste Grenzwerte (Minimalgewicht / Maximalgewicht), außerhalb derer er nicht angewandt wird und innerhalb derer eine lineare Abhängigkeit benutzt wird.

Nachteilig wirkt sich bei der bekannten Methode aus, dass bei bestimmten Kindersitzmodellen Gewichtsverteilungen auftreten, die die für das Funktionieren der Methode vorausgesetzte Asymmetrie nicht oder nur in geringer Größe verursachen, so dass eine Fehlinterpretation der Sitzbelegung nicht auszuschließen ist. Schwerpunktverschiebungen beim Festzurren von Kindersitzen können zwar vorkommen, sind jedoch stark abhängig von der Bauart des jeweiligen Kindersitzes und von der Handhabung der jeweiligen Bedienperson. Es kann auch nicht ausgeschlossen werden, dass ein Erwachsener durch die Einnahme einer die Sitzfläche einseitig belastenden Sitzposition eine asymmetrische Massenverteilung verursacht. Daher kann das bekannte Verfahren die besonders hohen Zuverlässigkeitsanforderungen an Systeme für sicherheitsrelevante Einrichtungen in Fahrzeugen nicht erfüllen.

Aus der WO 01/12473 A1 ist ein Fahrzeuginsassen - Positionsdetektor und ein Airbag - Steuerungssystem bekannt. Dabei wird neben der Gesamtmasse, mit der der Sitz belegt ist, und einer Schwerpunktsverlagerung nach außerhalb eines bestimmten Bereiches, noch die Neigung der Sitzlehne berücksichtigt. Zweck ist es, in Abhängigkeit des Belegungsgewichts und der Sitzposition einen Airbag zu aktivieren, bzw. zu deaktivieren oder mit einer reduzierten Stärke zu aktivieren. Die Sitzlehnenneigung wird indirekt durch ein, über jeweils zwei Kraftsensoren gemessenes Massenverhältnis von einem vorderen zu einem hinteren Sitzflächenbereich und durch Vergleich der Messwerte mit gespeicherten, vorgegebenen Vergleichswerten, festgestellt. Bei einer aufrechten Sitzhaltung oder einer Sitzposition im vorderen Bereich des Sitzes, wird ein höherer Wert des Massenverhältnisses erwartet, im Vergleich zu einer nach hinten zurückgelehnten Sitzposition eines Insassen. Wird auf eine eher aufrechte oder nach vorne verlagerte Sitzposition geschlossen, wird der Airbag auf eine reduzierte Entfaltungsstärke eingestellt oder deaktiviert. Darüber hinaus wird eine Unterscheidung zwischen der Belegung mit einem Erwachsenen von der mit einem Kind aufgrund des gemessenen Gesamtbelegungsgewichtes vorgenommen. Unterschreitet der Messwert ein bestimmtes Minimum, wird der Airbag deaktiviert oder mit reduzierter Entfaltungsstärke aktiviert.

Nachteilig wirkt sich aus, dass, wie bereits oben erläutert, durch besonders schwere Kindersitzmodelle oder durch die Gurtstraffung auch bei Kindersitzen mit Kindern hohe Gewichtskräfte auftreten können, wodurch die Heranziehung des Gesamtgewichts als alleiniges Kriterium zur Unterscheidung zwischen einer Sitzbelegung mit einem Kindersitz und der mit einem Erwachsenen untauglich ist. Weiterhin wirkt sich nachteilig aus, dass Kindersitze aufgrund unterschiedlicher Bauweisen, Größen, und Massen sowie durch die Gurtstraffung bei der Befestigung, verschiedene Gewichtsverteilungen erzeugen können, die einen Massenschwerpunkt in einem vorderen Sitzbereich, einem hinteren Sitzbereich oder auch eine gleichmäßige Gewichtsverteilung ergeben. Bei einem Erwachsenen könnte zwar anhand des Massenverhältnisses mit der bekannten Methode festgestellt werden, ob sich der Insasse in einer eher aufrechten oder einer eher zurückgelehnten Sitzposition befindet, da aber die Identifizierung des Erwachsenen nur aufgrund der Masse relativ unsicher ist, könnte ein Kindersitz mit einer nach hinten gerichteten Schwerpunktsverlagerung als eine zurückgelehnte Person identifiziert werden, was in der Folge fälschlicherweise zu einer Aktivierung des Airbags führen würde, obwohl der Sitz mit einem Kindersitz und einem Kind belegt ist.

Insgesamt führt also eine Messung des Gewichtes und der Gewichtsverteilung nicht ohne Weiteres zu einer zuverlässigen Unterscheidung zwischen einer Sitzbelegung mit einem Kindersitz und einem Kind und der mit einem Erwachsenen.

Die WO-A-02/30717 zeigt die Merkmale des Oberbegriffs der unabhängigen Ansprüche 1 und 29.

Aufgabe der vorliegenden Erfindung ist es daher, ein Verfahren zu entwickeln, mit dem eine zuverlässige Identifikation der Art der Belegung einer Auflagefläche und insbesondere eine sichere Unterscheidung der Belegung eines Kraftfahrzeugsitzes mit einer erwachsenen Person von der Belegung mit einem Kindersitz und einem Kind erreicht wird.

Diese Aufgabe wird erfindungsgemäß in Verbindung mit dem Oberbegriff des Anspruches 1 dadurch gelöst, dass die zu vorgegebenen Zeitpunkten $t_i$ registrierten Sensorsignale $s_i$ oder aus diesen abgeleitete Größen fortlaufend so in einem Speicher abgespeichert werden, dass zu jedem Zeitpunkt die Sensorsignale $s_i$ oder die aus diesen abgeleiteten Größen jeweils aus der letzten Vergangenheit zur Auswertung zur Verfügung stehen, und dass aus diesen abgespeicherten Werten mittels mindestens zweier unabhängiger Rechenmethoden oder mittels eines neuronalen Netzes auf die Art der Belegung geschlossen wird.

In bzw. unter der Auflagefläche angeordnete Kraftsensoren liefern auf an sich bekannte Weise Sensorsignale, die in direktem physikalischem Zusammenhang mit den auf die Auflagefläche ausgeübten Gewichtskräften stehen. Bei den bisherigen Verfahren zur Identifikation der Belegung von Kraftfahrzeugsitzen, wurde aus diesen Signalen auf eine Belegmasse, d.h. auf das Gewicht des Belegers, und auf einen Schwerpunkt der Belegmasse geschlossen. Die gemessenen Gewichtskräfte geben aber nicht unbedingt das tatsächliche Gewicht der Belegperson wieder, da durch Gurtkräfte, wie bereits einleitend erläutert, Verfälschungen auftreten können. Die gemessene Belegungsmasse ist das Resultat aus der auf der Auflagefläche aufliegenden tatsächlichen Masse $m_0$ und allen auf die Auflagefläche zusätzlich einwirkenden Kräften. Auch der Massenschwerpunkt ist an sich nicht aussagekräftig genug, da bestimmte Massenverteilungen, wie bereits ebenfalls einleitend erläutert, auf vielfältige Weise entstehen können. Die bisherigen Verfahren betrachten jeweils nur eine aktuelle Momentaufnahme der Belegung, dabei wird die Historie außer Acht gelassen. Bei dem erfindungsgemäßen Verfahren werden nun hingegen aus der Größe einer Anzahl der über einen bestimmten Zeitraum in vorgegebenen Zeitabständen hinweg registrierten und in dem Speicher abgespeicherten Sensorsignale $s_i$, bzw. aus daraus abgeleiteten Größen, der zeitliche Verlauf der Massenänderungen betrachtet.

Der Speicher ist nach einer bevorzugten Ausführungsform als ein Schieberegister ausgebildet. Unter dem Schieberegister wird zum einen, wie im herkömmlichen Sinn, ein sich zeitlich verschiebendes elektronisches Fenster verstanden, in dem sich ein über die Zeit hin ändernder jeweiliger Satz von Messgrößen befindet. Dabei werden bei einem Verschieben des Registers die jeweils ältesten Daten verworfen. Darüber hinaus kann das Schieberegister auch in einem allgemeineren Sinn als ein elektronisches Fenster ausgebildet sein, in dem alle in der zeitlichen Abfolge registrierten Informationen erhalten bleiben. Insbesondere ist ein Schieberegister denkbar, bei dem die Informationen (INFO) im Zeitverlauf eine Gewichtung c(t) erhalten, beispielsweise INFO=INFO(t)*c(t), mit $1/2 \leq c(t) \leq 1$ für $t > t_0$ , $t_0$: Messbeginn, und $c(t) \rightarrow 0$, für $t \rightarrow \infty$. Dabei würden alle Informationen der Vergangenheit zur weiteren Verwertung herangezogen, wobei die Informationen durch die Wirkung des Schieberegisters mit einer sich mit der Zeit ändernden Gewichtung versehen werden können.

Maximal können drei unabhängige Messgrößen gemessen werden. Die erste Messgröße ist die Masse

$$m = \sum_{r=1}^{R} s_r \; ,$$ R: Anzahl der Sensoren, d.h. die Masse als Summe der Sensorsignale über die Anzahl der vorhandenen Sensoren zu einem jeweiligen Abtastzeitpunkt. Da der zeitliche Verlauf ausgewertet wird, sind die absoluten Werte nicht unbedingt notwendig. Es kann eine auf den Maximalwert normierte Massenskala verwendet werden. Die zweite und dritte Messgröße sind die Schwerpunktskoordinaten $x = \sum_{r=1}^{R} \left( a_r * s_r \right)/m$ und $y = \sum_{r=1}^{R} \left( b_r * s_r \right)/m$, dabei sind $a_r$ und $b_r$ Hebelarme (Abstände in x und y Richtung in einem kartesischen Koordinatensystem), die sich durch die Sensoranordnung ergeben. Ist die Anzahl der Sensoren $R > 3$ gibt es redundante Informationen, d.h. es werden nur drei Informationen von den z.B. R=4 Sensorsignalen benutzt. Ist $R \leq 3$ werden alle Sensorsignale betrachtet.

Aus dem zeitlichen Verlauf der Belegung der Auflagefläche lassen sich eine Fülle zusätzlicher Informationen gewinnen, die eine sichere Identifikation ermöglichen. Absolute Massenwerte können darüber hinaus als zusätzliche Informationen, wie in den Unteransprüchen näher beschrieben, berücksichtigt werden. Aus dem zeitlichen Verlauf der Sensorsignale und den daraus abgeleiteten Größen ergeben sich insbesondere typische Strukturmerkmale anhand derer es möglich ist, Erwachsene, Kinder oder gegenständliche Lasten als Beleger zu unterscheiden. Beispielsweise können große Massensprünge oder der Zeitraum, bis sich ein relativ konstantes Messsignal einstellt, herangezogen werden. Durch eine Auswertung der Strukturmerkmale mit geeigneten Rechenmethoden, beispielsweise statistischen Verfahren, bei denen aktuelle Messwerte mit bereits von dem Auswertungsalgorithmus erlernten Strukturmerkmalen verglichen werden, und bei denen der historische Verlauf der Messgrößen Berücksichtigung findet, ist es möglich, zuverlässige Aussagen über die Art der Belegung zu machen.

Der Rechenalgorithmus verwertet dazu ein Ensemble von Messdaten aus einem Klassifizierungsfenster, das eine bestimmte Zahl von Messdaten, die über einen bestimmten Zeitraum hinweg gemessen wurden, enthält, und erkennt daraus letztlich die Art der Belegung des Sitzes.

Die Zuverlässigkeit der Aussagen lässt sich mit der Anzahl der eingesetzten Rechenmethoden und sonstigen Nebeninformationen, wie absolute Massen oder Beschleunigungen im Fahrbetrieb, die in den Unteransprüchen beschrieben sind, verbessern.

Gemäß einer bevorzugten Ausführungsform der Erfindung wird die Belegung des Kraftfahrzeugsitzes durch eine erwachsene Person von der Belegung mit einem Kindersitz und einem Kind unterschieden.

Das Verfahren ist in besonderer Weise zur Unterscheidung der Belegung eines Kraftfahrzeugsitzes durch eine erwachsene Person von der Belegung mit einem Kindersitz und einem Kind geeignet. Kindersitze erzeugen Belegungsmuster, die von den Belegungsmustern von Erwachsenen differieren. Dadurch ist es beispielsweise möglich, eine Belegung durch die sogenannte 5%-Frau von einer Belegung durch einen gleich schweren Kindersitz mit einem Kind zu unterscheiden. Es wird auch eine sichere und zuverlässige Unterscheidung eines mit einer hohen Kraft fest verzurrten Kindersitzes von einer gleich schweren erwachsenen Person getroffen. Durch die treffsichere Klassifizierung ist das Verfahren besonders zur Ansteuerung sicherheitsrelevanter Fahrzeugeinrichtungen, wie Airbags, geeignet.

Nach einer weiteren bevorzugten Ausführungsformen der Erfindung wird die Registrierung der Sensorsignale $s_i$ über ein externes Startsignal gestartet. Das externe Startsignal kann vom Öffnen einer Fahrzeugtür geliefert werden, und die fortlaufende Registrierung der Sensorsignale kann mindestens bis zur Beendigung eines Einsitzvorganges erfolgen.

Die Betrachtung des zeitlichen Verlaufs eines sogenannten Einsitzvorgangs eignet sich besonders zur Strukturmerkmalerkennung der Sitzbelegung. Dabei wird u.a. die Erfahrung ausgenutzt, dass das Hinsetzen und Anschnallen einer erwachsenen Person wesentlich schneller vonstatten geht im Vergleich zu dem Festschnallen eines Kindersitzes mit anschließendem Hineinsetzen und Anschnallen des Kindes. Typischerweise dauert ein Einsitzvorgang eines Erwachsenen nur einige Sekunden. Der Einsitzvorgang bei einem Kindersitz kann in den Minutenbereich gehen. In diesem Zeitraum werden verschiedene Massenänderungen durch die typischen Handhabungen aufgezeichnet, etwa mehrmaliges Gurtanziehen, Knie aufstemmen, Einsetzen des Kindes, usw., die dann ein charakteristische Strukturmerkmale für den Kindersitz erzeugen. Diese Merkmale werden dann über die eingesetzte(n) Rechenmethode(n) interpretiert. Vom Zeitpunkt der Beendigung des Einsitzvorgangs an, kann nach etwa 3 Sekunden eine entsprechende Aussage über die Belegung getroffen werden. Als Startsignal für den Messbeginn kommt ein Öffnen einer Fahrzeugtür in Frage. Grundsätzlich sind jedoch auch andere Startsignale für sich alleine oder in Kombinationen möglich.

Gemäß einer weiteren bevorzugten Ausführungsform der Erfindung wird durch eine fortlaufende Registrierung und Auswertung der Sensorsignale $s_i$ oder der aus diesen abgeleiteten Größen die Art der Belegung kontinuierlich überwacht.

Durch eine kontinuierliche Überwachung können auch sich während der Benutzung der Auflagefläche ergebende Änderungen erkannt werden. Unter kontinuierlicher Überwachung wird hier verstanden, dass in vorgegeben Zeitabständen die Identifikation erneuert wird oder dass das System selbständig auf Änderungen der Belegung reagiert und eine Erneuerung der Identifikation einleitet. Insbesondere ist es dadurch möglich, grundsätzlich denkbare Sitzplatzwechsel in einem Kraftfahrzeug während der Fahrt, beispielsweise in einem Wohnmobil, zu erkennen und entsprechende Steuersignale, etwa für ein Airbagsystem, zu generieren.

In den Unteransprüchen 7 bis 12 sind die einzelnen Schritte des Verfahrens in bevorzugten Ausführungsformen beschrieben.

Durch die Rechenmethode(n) werden Belegungswahrscheinlichkeiten $W_k(t_i)$ aus n (vorzugsweise n = 64 nach Unteranspruch 10) Messungen zu den Zeitpunkten $t_i$ (i=1...n) für verschiedene Arten der Belegung der Auflagefläche, bzw. des Kraftfahrzeugsitzes, gewonnen (Unteranspruch 7). Diese Belegungsarten werden nach einer Klassifizierung eingeteilt (Unteranspruch 8):

KONSTANT,

UNBELEGT,

PERSON,

KINDERSITZ.

Dabei bedeutet "KONSTANT", dass der Auswertungsprozess zu einem "stabilen" Ergebnis gelangt ist und keine weitere Umklassifizierung vorgenommen wird. Das Ergebnis kann "UNBELEGT" lauten, d.h. dass der Sitz nicht belegt ist. In der Folge wird die Historie, d.h. eine davor liegende Belegung gelöscht, d.h. es wird ein Grundzustand für einen neuen Identifikationsprozess eingestellt. Lautet das Ergebnis "PERSON" oder "KINDERSITZ", wird eine entsprechende Klasse festgelegt und in der Folge ein entsprechendes Steuersignal, vorzugsweise für einen Airbag (Unteransprüche 13 und 14) die Signale "AIRBAG EIN" bzw. "AIRBAG AUS", generiert. Die Rechenmethoden haben einen deterministischen Charakter, die Ergebnisse werden allerdings als Wahrscheinlichkeiten ausgegeben. Daher durchläuft die Klassifizierung vor der Festschreibung der Klasse einen Vertrauens- oder Konfidenzalgorithmus (Unteranspruch 23). Dabei werden die einzelnen eingesetzten Methoden mit einem Konfidenzfaktor $c_j$ gewichtet und ergeben dann in der Summe eine Gesamtwahrscheinlichkeit $W_k(t_i)$ zu einem jeweiligen Abtastzeitpunkt $t_i$ (Unteranspruch 23). Für eine Klassifizierung muss eine Wahrscheinlichkeit $W_k(t_i)$ für die Klasse k=p für "PERSON" oder k = cs für "KINDERSITZ", einen Mindestwert überschreiten. Vorzugsweise liegt dieser Mindestwert bei $W_{lim}$ = 0,9 (Unteranspruch 11), d.h. bei einer Wahrscheinlichkeit von 90%. Zur weiteren Absicherung muss für die Festschreibung der Klasse noch die Historie der Klassierung betrachtet werden. Dazu wird anschließend ein Klassifizierungsfenster, in dem die Wahrscheinlichkeiten $W_k(t_i)$ über n Zeitpunkte $t_i$ abgelegt sind, ausgewertet. Dabei wird als Kriterium angesetzt, wie groß die Spanne von Werten ist, in der sich die Klassifizierung nicht ändert. Daraus erhält man einen Konfidenzkoeffizienten $C_k$. Erst wenn der Konfidenzkoeffizient $C_k$ einen Mindestwert, vorzugsweise $C_{lim}$ = 0,75 (75%) (Unteranspruch 12) überschreitet, wird die Klasse entgültig festgeschrieben. Durch diese Prozedur erhält man ein Höchstmaß an Sicherheit des Auswertungsergebnisses. Dadurch erfolgt insbesondere eine Unterscheidung der Sitzbelegung mit einem Erwachsenen von der eines Kindes in einem Kindersitz mit einer sehr hoher Zuverlässigkeit, die den Sicherheitsansprüchen in der Fahrzeugtechnik genügt.

In dem Konfidenzalgorithmus können weitere Randbedingungen berücksichtigt werden, z.B. eine Einstufung "NICHT KLASSIFIZIERBAR" aufgrund eines schlechten Signalzu-Rausch-Verhältnisses oder absolute Massenwerte zur Überprüfung eines festgelegten Mindestgewichts $m_{pmin}$ für einen Erwachsenen (Unteransprüche 15 und 16) oder eine Eliminierung von Gurtkräften bei der Gewichtsmessung durch Berücksichtigung von Beschleunigungskräften, die während der Fahrt auf den Sitz einwirken (Unteranspruch 17), oder Kräfte durch Gegenstände, die unter dem Sitz verstaut sind und nach oben drücken (Unteranspruch 18), um die Zuverlässigkeit der Identifizierung noch weiter zu erhöhen.

Die Methode ist grundsätzlich für alle am Markt vertretenen Kindersitzmodelle einsetzbar und ist im Gegensatz zu den bisherigen Methoden nicht störanfällig gegenüber hohen Gurtkräften, besonderen Sitzpositionen oder ungewöhnlichen Massenverteilungen. Ein Gurtkraftsensor ist dabei nicht notwendig.

In den Unteransprüchen 13 und 14 sind bevorzugte Ausführungsformen der Erfindung für die Ansteuerung eines Airbagsystems beschrieben. Danach wird ein einem Kraftfahrzeugsitz zugeordnetes Airbagsystem über das Steuersignal deaktiviert, wenn die Belegungsklasse k = cs ermittelt wird, und aktiviert, wenn die Belegungsklasse k = p ermittelt wird. Es ist auch möglich, dass das dem Kraftfahrzeugsitz zugeordnete Airbagsystem über das Steuersignal derart aktiviert wird, dass es im Auslösungsfall mit einer verminderten Druckkraft aufgeblasen wird, wenn die Belegungsklasse k = es ermittelt wird, und dass das Airbagsystem im Auslösungsfall mit voller Druckkraft aufgeblasen wird, wenn die Belegungsklasse k = p ermittelt wird.

Die Identifikation der Belegung kann für eine situationsbezogene Ansteuerung eines Airbagsystems besonders vorteilhaft eingesetzt werden. Durch die Deaktivierung oder Reduzierung der Aufblasstärke des Airbags, wenn der Fahrzeugsitz mit einem Kind belegt ist, kann eine mögliche Verletzungsgefahr des Kindes durch die Funktion des Airbags mit seiner vollen Aufblasstärke vermieden werden. Es ist auch möglich, durch eine Reduzierung der Aufblasstärke des Airbags die Schutzfunktion des Airbags für ein Kind optimal zu nutzen, ohne dass der Airbag selbst eine Verletzungsgefahr darstellt. Weiterhin können auch alle Airbags, die aktuell während der Fahrt unbelegten Sitzen zugeordnet sind, ausgeschaltet werden. Dadurch ergibt sich ein potenzieller Reparaturkostenvorteil nach einer Kollision. Weiterhin ist es auch denkbar, den Airbag auszuschalten, wenn ein Gegenstand auf dem entsprechenden Sitz abgelegt ist.

In den Unteransprüchen 15 und 16 sind bevorzugten Ausführungsformen der Erfindung beschrieben, die eine Verwendung absoluter Werte für die Belegmasse betreffen.

Durch die Berechnung einer absoluten Belegmasse, mit der der Sitz belegt ist, können Zusatzinformationen gewonnen werden, die die Zuverlässigkeit des Verfahrens weiter verbessern. Vorzugsweise wird der Grenzwert $m_{pmin}$ als Mindestgewicht für einen Erwachsenen vorausgesetzt ($m_{pmin}$ = 32,5kg), der als Mindestkraft gemessen werden muss, wenn ein Erwachsener den Sitz belegt, d.h. bei einem Messwert unter $m_{pmin}$ wird die Klasse p ausgeschlossen. Ein Airbag könnte dann, unabhängig von der tatsächlichen Belegung, sicherheitshalber deaktiviert werden. Der Umkehrschluss ist nach dem bisher Gesagten natürlich nicht möglich. Aus einer Schwerpunktsermittlung können vergleichbare Informationen gewonnen werden.

In den Unteransprüchen 17 und 18 sind bevorzugte Ausführungsformen der Erfindung beschrieben, die eine Eliminierung von möglichen Einflüssen durch Fahreffekte und / oder unter dem Sitz befindliche Gegenstanden betreffen.

Gemäß der in Unteranspruch 17 beschriebenen bevorzugten Ausführungsform der Erfindung werden während des Fahrbetriebes des Kraftfahrzeuges durch Fahreffekte verursachte und auf den Kraftfahrzeugsitz einwirkende, über die Sensorsignale $s_i$ registrierte, Beschleunigungskräfte bei der Klassifizierung berücksichtigt.

Die Methode dient zur Erkennung der wahren Masse $m_0$ auf dem Sitz. Mit wahrer Masse ist dabei die Last ohne Gurtkraft gemeint. Die Methode greift erst nach einigen Minuten im Fahrbetrieb, im Vergleich zu der oben beschriebenen Strukturtmerkmalerkennung, die im Idealfall eine Identifikation bereits 3 Sekunden nach Beendigung des Einsitzvorgangs ermöglicht. Sie wird daher als eine zusätzliche "Rückversicherung" betrachtet, die der bereits getroffenen Entscheidung weitere Evidenz verleiht. Die Zuverlässigkeit des Verfahrens lässt sich also mit dieser Methode noch weiter erhöhen. Die Funktionsweise der Methode wird mit typischen Werten anhand folgender Betrachtung verdeutlicht:

Ein erster Effekt entsteht durch zusätzliche vertikale Beschleunigungen. Die scheinbare Masse m und die Schwerpunktskoordinaten (x, y) werden als Funktion der Zeit im Fahrbetrieb gemessen und daraus statistische Kenngrößen ermittelt (Standardabweichungen). An der Masse $m_0$ greife durch Fahrwerksunruhen eine zusätzliche vertikale Beschleunigung an. Es wird eine Person von $m_0$ = 90kg sowie ein Kindersitz mit $m_0$ = 30kg und einer zusätzlichen Gurtkraft von 60 kg betrachtet, also m = $m_0$ + 60kg = 90kg. Während also die Lastanzeige m jeweils 90 kg beträgt, ist die typische Reaktion auf die Fahrwerksunruhen mit vertikalen Beschleunigungsänderungen von beispielsweise $\pm$ 0.1g für die Person $\delta m$ = $\pm$ 9kg und für den Kindersitz $\delta m$ = $\pm$ 3 kg, also 3 mal kleiner als der angezeigten Last m entspricht. Der Effekt wird mit $\delta m$ - Reduktion bezeichnet.

Ein zweiter Effekt entsteht durch eine Einengung einer horizontale Bewegung des Schwerpunktes durch eine Gurtkraft. Je nach Gurtkraft kann dieser Effekt bis zu einem Faktor 10 die Beweglichkeit des Schwerpunktes verringern. Dieses, im zeitlichen Verlauf sehr auffällige Merkmal ist unabhängig von der unverspannten (nicht festgeschnallten) Masse $m_0$ bzw. von der Lastanzeige m (da der Schwerpunkt definiert ist als Drehmoment pro Masse). Der Effekt wird als $\delta(x; y)$ - Reduktion bezeichnet.

Nach einer in Unteranspruch 19 beschriebenen weiteren bevorzugten Ausführungsform der Erfindung werden durch Langzeiteffekte auftretende Messgrößenänderungen $\delta m$, $\delta x$, $\delta y$ bei der Klassifizierung berücksichtigt.

Unter einem Langzeiteffekt wird beispielsweise ein sogenanntes Gurtkrafteinlaufen verstanden. Dies zeigt sich dadurch, dass Schwerpunkt und Massenanzeige direkt nach dem Festzurren des Gurtes bei der Befestigung eines Kindersitzes exponentiell absättigen zu einem langfristig nahezu konstanten Niveau. Das Gurtkrafteinlaufen kann sowohl im fahrenden als auch im ruhenden Fahrzeug auftreten, wobei im Fahrbetrieb durch die Fahrwerksunruhen das Gurtkrafteinlaufen beschleunigt werden kann. Dieser Effekt kann als weiteres zusätzliches Kriterium zur Sitzbelegungsidentifizierung Berücksichtigung finden.

In den Unteransprüchen 20 bis 25 sind bevorzugte Ausführungsformen der Erfindung beschrieben, die verschiedene geeignete Rechenmethoden betreffen.

Gemäß einer bevorzugten Ausführungsform nach Unteranspruch 20 der Erfindung, beruht die Belegungserkennung eines Kraftfahrzeugsitzes auf einer Erkennung eines für die Art der Sitzbelegung charakteristischen Sitzbelegungsmusters anhand der Auswertung der Speicherinhalte mit Hilfe des neuronalen Netzes.

Neuronale Netze sind wirkungsvolle Werkzeuge zur Mustererkennung statistischer Messdaten. Ihre Funktionsweise ist an sich bekannt, beispielsweise aus der WO 95/24616. Das neuronale Netz beinhaltet die in Unteranspruch 21 beschriebenen speziellen Eigenheiten. Als Speicher- bzw. Schieberegisterinhalte werden die Messgrößen m, x, y, verstanden. Wenn alle vorhandenen Muster implementiert sind, reicht ein neuronales Netz als alleinige Rechenmethode für eine zuverlässige Identifizierung der Sitzbelegung aus. Das neuronale Netz ist eine indeterministische Methodik mit dem Ziel, eine Übereinstimmung von m(t) mit fest vorgegebenen Mustern zu erreichen. Als Ausgabewerte werden Wahrscheinlichkeiten für p und cs ermittelt.

Gemäß der in Unteranspruch 22 beschriebenen bevorzugten Ausführungsform der Erfindung sind mindestens zwei unabhängige Rechenmethoden vorgesehen. Eine erste Rechenmethode beruht zum Beispiel auf einer Strukturmerkmalerkennung der Sitzbelegung anhand der Auswertung der Speicher- oder Schieberegisterinhalte mit Hilfe einer Regressionsanalyse. Eine zweite Rechenmethode beruht zum Beispiel auf der Strukturmerkmalerkennung anhand der Auswertung der Speicher- oder Schieberegisterinhalte mit Hilfe einer Belegungsentropieanalyse.

Die Regressionsanalyse in Kombination mit der Belegungsentropieanalyse bietet eine besonders hohe Zuverlässigkeit bei der Identifikation der Sitzbelegung. Zudem ist der Speicherbedarf relativ niedrig. Es sind die in den Unteransprüchen 25 und 26 beschriebenen speziellen Schritte vorgesehen. Die Regressionsanalyse ist eine deterministische Methode (vgl. Methode der kleinsten Fehlerquadrate). Als Ausgabe werden Korrelationskoeffizienten und quantitative Aussagen-Werte (Stufenhöhe, Steigung, ..) ermittelt. Die Werte werden in einer sogenannten Memberfunktion eingespeist, d.h. (i.a. nichtlinear) abgebildet auf 0 (=unwahrscheinlich) bis 1(sehr wahrscheinlich). Bei der Belegungsentropie handelt es sich um ein statistisches Verfahren ohne bestimmte Muster. Als Ausgabe wird ein Entropiewert S ermittelt. Eine geringe Entropie lässt auf eine kontante Belegung oder auf eine Belegung durch eine Person schließen, eine hohe Entropie ist dagegen ein Hinweis auf einen Kindersitz.

Nach weiteren, in den Unteransprüchen 27 und 28 beschriebenen, bevorzugten Ausführungsformen der Erfindung, ist als eine zusätzliche Rechenmethode eine Strukturmerkmalerkennung der Sitzbelegung mit Hilfe einer Fast-Fourier-Transformations-Analyse der Speicherinhalte vorgesehen. Es kann auch als eine zusätzliche Rechenmethode eine Strukturmerkmalerkennung mit Hilfe einer Autokorrelationsanalyse der Speicherinhalte vorgesehen sein.

Bei der Fast-Fourier-Transformations-Analyse wird die Fast-Fourier-Transformierte fft zu mehreren Zeitpunkten $t_i$ berechnet. Es wird geprüft, ob die Gesamtstruktur bei zeitlicher Verschiebung sich selbst ähnlich belibt. Ist dies der Fall, so sind die FourierTransformierten zu verschiedenen Zetpunkten in einfacher Weise miteinander verknüpft. Die erwartete Selbstähnlichkeit gilt für die Strukturen PERSON und KONSTANT, nicht aber für die Struktur KINDERSITZ. Eine Autokorrelationsanalyse führt zu einem vergleichbaren Resultat. Die beiden Methoden können jeweils als zusätzliche Methoden, insbesondere als Ergänzung der Regressionsanalyse, die Aussagesicherheit über die Klassifizierung weiter erhöhen.

Während die Methode des neuronalen Netzes als alleinige Methode funktioniert, wenn alle wesentlichen Muster implementiert sind, funktionieren die anderen Methoden als Kombinationen, insbesondere als Kombination der Regressionsanalyse und der Belegungsentropie. Diese Methoden benötigen nur Strukturmerkmale, d.h. keine feste Morphologie wie das neuronale Netz. Sie sind daher noch allgemeiner anwendbar und haben, da sie durch zahlreiche Parameter gesteuert werden, eine hohe Flexibilität in der Anpassung an unterschiedliche Problemfelder. Besonders vorteilhaft können diese beiden Methoden noch mit der Fast-Fourier-Transformation kombiniert werden. Kombiniert man schließlich alle besprochenen Methoden miteinander, erhält man zumindest in Teilen redundante Aussagen. Dadurch kann die Treffsicherheit nochmals verbessert werden.

Zusammenfassend sind im Überblick im Folgenden einige Strukturmerkmale für eine Person und für einen Kindersitz aufgeführt:

Notwendige Strukturmerkmale für eine Person sind: Eine große Stufe in m, eine hohe Steigung dm/dt der Stufe, eine gute Korrelation einer gemessenen Stufe mit einer theta-Funktion (Sprungfunktion), Anzahl der Stufen =1, keine Stufe abwärts, keine signifikante weitere Struktur außer Rauschen, eine kleine Belegungsentropie (S=0), ein in der Zeit translationsinvariantes Muster, Muster p wird vom neuronalen Netz erkannt. Optionale Strukturmerkmale für eine Person sind: hohes Rauschen in x(t) und y(t) durch Personenbewegung, m(t) bleibt auch längere Zeit auf hohem Niveau.

Notwendige Strukturmerkmale für einen Kindersitz sind: Belegungsentropie groß (S=2). Muster cs wird vom neuronalen Netz erkannt. Optionale Strukturmerkmale: Eindeutiger Trend in x(t) oder y(t) in eine Richtung (zur Seite oder nach hinten), x(t) und y(t) ändern sich letztlich wenig (geringes Rauschen), wesentliche Strukturen in m(t) (mehrere Stufen), kurzzeitig hohe Auslenkungen in m(t) oder x(t), y(t) (Spitzen).

Die bekanten Vorrichtungen zur Bestimmung einer Belegungsmasse einer Auflagefläche haben den Nachteil, dass sie für eine sichere Identifikation der Art der Belegung unzureichend ausgebildet sind.

Weitere Aufgabe der vorliegenden Erfindung ist es daher, die bekannten Vorrichtungen derart weiterzubilden, dass mit ihnen ein Verfahren zur Identifikation der Art der Belegung der Auflagefläche, das den Anforderungen an Zuverlässigkeit und Informationsvielfalt genügt, durchführbar ist.

Diese Aufgabe wird erfindungsgemäß in Verbindung mit dem Oberbegriff des Anspruches 29 dadurch gelöst, dass die Messelektronik mit einem Speicher verbunden ist, in dem die zu vorgegebenen Zeitpunkten $t_i$ registrierten Sensorsignale $s_i$ oder aus diesen abgeleitete Größen fortlaufend so abspeicherbar sind, dass zu jedem Zeitpunkt die Sensorsignale $s_i$ oder die aus diesen abgeleiteten Größen jeweils aus der letzten Vergangenheit zur Auswertung zur Verfügung stehen, und dass eine Datenverarbeitungseinheit vorgesehen ist, die aus den im Speicher abgespeicherten Werten mittels mindestens zweier unabhängiger Rechenmethoden oder mittels eines neuronalen Netzes die Art der Belegung ermittelt..

In dem Speicher sind die Sensorsignale $s_i$, bzw. die Messgrößen m, x, y zeitlich fortlaufend ablegbar, so dass der zeitliche Verlauf der Belegung der Auflagefläche erfassbar ist. Über die Datenverarbeitungseinheit ist dann der Rechenalgorithmus mit Messdaten speisbar, der Basis eines Verfahrens ist, mit dem aus dem zeitlichen Verlauf der Daten die Art der Belegung der Auflagefläche identifizierbar ist und darüber hinaus, für eine einmalige oder ständige Überwachung, eine Fülle von Informationen extrahierbar ist. Dadurch ergeben sich erheblich erweiterte Möglichkeiten zur Ansteuerung von Einrichtungen im Zusammenhang mit der Art der Belegung der Auflagefläche.

Nach einer bevorzugten Ausführungsform der Erfindung ist die ansteuerbare Einrichtung ein Airbagsystem.

Die Vorrichtung kann besonders vorteilhaft für die Ansteuerung von Airbagsystemen in der Kraftfahrzeugtechnik verwendet werden. Dadurch ist es möglich, die Airbags gezielt ein- oder auszuschalten oder auch mit verminderter Aufblasstärke anzusteuern. Damit kann der Airbag individuell auf die aktuelle Belegung eines Sitzes abgestimmt werden, insbesondere um Kinder vor einer potenziellen Verletzungsgefahr durch den Airbag zu bewahren.

Gemäß einer weiteren bevorzugten Ausführungsform der Erfindung ist ein von einer Bordspannungsversorgung eines Kraftfahrzeuges unabhängiger Ergebnisspeicher zur Speicherung der über die Datenverarbeitungseinheit ausgewerteten Daten vorgesehen. Der Ergebnisspeicher wird zumindest dann gelöscht, wenn der Speicher bzw. das Schieberegister komplett gelöscht wird (bei unbelegtem Sitz).

Durch den Ergebnisspeicher kann die Historie der Sitzbelegung auch unabhängig von der Energieversorgung des Fahrzeuges gespeichert und gesichert werden. Dadurch kann gewährleistet werden, dass auch bei einer Unterbrechung der Energieversorgung, beispielsweise durch einen Defekt oder bei einem Abklemmen der Batterie, die Funktion der Ansteuerung des Airbags durch die von der Art der Sitzbelegung abhängigen Steuersignale gewährleistet und erhalten bleibt. Das Maß an Funktionssicherheit und Zuverlässigkeit des Airbagsystem wird dadurch weiter erhöht.

Das Verfahren und die Vorrichtung sind nicht auf die Identifikation der Belegung von Kraftfahrzeugsitzen beschränkt. Grundsätzlich ist das erfindungsgemäße Verfahren bei allen Arten von Auflageflächen geeignet, bei denen über Kraftsensoren eine Belegmasse messbar ist. Insbesondere ist das erfindungsgemäße Verfahren auch für Krankenbetten und Krankensitze geeignet, beispielsweise um bestimmte Krankheitsbilder, die mit Patientenbewegungen verknüpft sind, wie etwa das "Restless-Leg-Syndrom", zu erkennen, in der Schlafforschung oder um Gewichtsverlagerungen eines Patienten zu registrieren. Obwohl das erfindungsgemäße Verfahren besonders auf die Identifikation der Belegung eines Kraftfahrzeugsitzes ausgerichtet ist, kann es bei einer vergleichbaren Vorgehensweise an die Erfordernisse für die speziellen Krankenbetten, bzw. -sitze angepasst werden. Insbesondere eignen sich die Methoden der Regressionsanalyse und der Belegungsentropieanalyse für eine entsprechende Anpassung durch Einlesen der Systemparameter.

Weitere Einzelheiten der Erfindung ergeben sich aus der nachfolgenden ausführlichen Beschreibung und den beigefügten Zeichnungen, in denen bevorzugte Ausflihrungsformen der Erfindung beispielsweise veranschaulicht sind.

In den Zeichnungen zeigen:

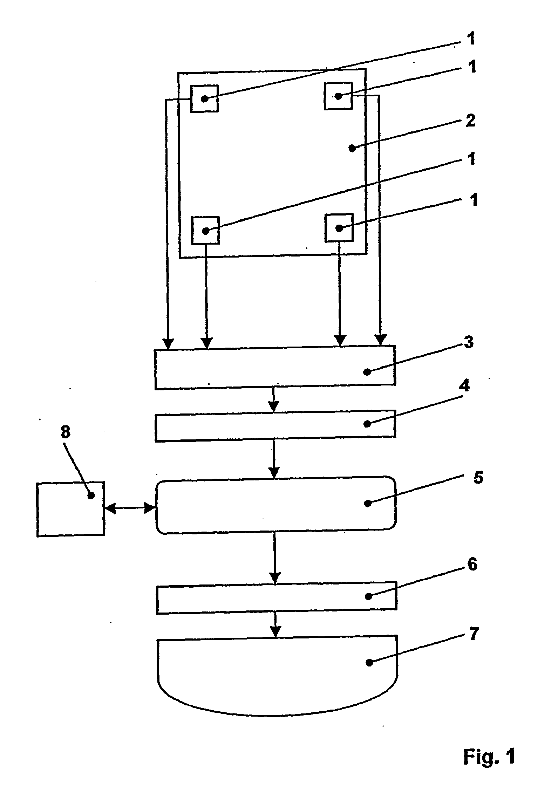

Figur 1: Ein Blockschaltbild einer Vorrichtung zur Identifikation der Art der Belegung eines Kraftfahrzeugsitzes und

Figur 2: Diagramme des zeitlichen Verlaufs der Belegung des Kraftfahrzeugsitzes für verschiedene Belegungsarten.

Eine Vorrichtung zur Identifikation der Art der Belegung eines Kraftfahrzeugsitzes 2 besteht im Wesentlichen aus vier Kraftsensoren 1, die mit einer Messelektronik 3 und einem Speicher 4 verbunden sind. Der Messelektronik 3 ist eine Datenverarbeitungseinheit 5 nachgeschaltet, mit der über eine Steuereinheit 6 ein Airbagsystem 7 ansteuerbar ist.

In bzw. unter der Sitzfläche des Kraftfahrzeugsitzes 2 sind auf an sich bekannte Weise vorteilhaft vier Kraftsensoren 1 in den Eckbereichen der Sitzfläche angeordnet, mit denen über die Messelektronik 3 die auf die Sitzfläche einwirkende Gewichtskraft, bzw. Masse, messbar ist. Als Sensoren kommen grundsätzlich mindestens drei Kraftsensoren 1, aber auch eine Drehachse in Verbindung mit mindestens einem Kraftsensor oder auch Sensorfolien in Betracht, mit denen über die Sitzfläche eine Belegungsmasse und eine Lastverteilung messbar ist. Die Messelektronik 3 ist derart ausgebildet, dass sie in dem Speicher 4 die zu vorgegebenen Zeitpunkten $t_i$ registrierten Sensorsignale $s_i$ oder aus diesen abgeleitete Größen jeweils aus der letzten Vergangenheit mit vorgebbarer Abtastrate fortlaufend ablegt. Die Sensorsignale $s_i$ werden von der Datenverarbeitungseinheit 5 aufgenommen und mittels mindestens zweier unabhängiger Rechenmethoden oder mittels eines neuronalen Netzes weiterverarbeitet. Als Ergebnis wird ein Steuersignal bereitgestellt, das von der Steuereinheit 6 verwertbar ist, um die Funktionsbereitschaft des Airbagsystems 7 zu aktivieren, zu deaktivieren oder mit verminderter Funktionsstärke zu aktivieren. Ein von der Bordspannungsversorgung eines Kraftfahrzeuges unabhängiger Ergebnisspeicher 8 zur Speicherung der über die Datenverarbeitungseinheit 5 ausgewerteten Daten steht mit der Datenverarbeitungseinheit 5 in Verbindung.

Ein Verfahren zur Identifikation der Art der Belegung eines Kraftfahrzeugsitzes 2 beruht im Wesentlichen darauf, dass aus der Größe und dem zeitlichen Verlauf der in dem Speicher 4, bspw. einen als Schieberegister fungierenden Zeitfenster, zu vorgegebenen Zeitpunkten $t_i$ registrierten Sensorsignale auf die Art der Belegung geschlossen wird.

Als ein mögliches Ausführungsbeispiel wird im Folgenden die Identifikation der Art der Sitzbelegung anhand eines neuronalen Netzes beschrieben:

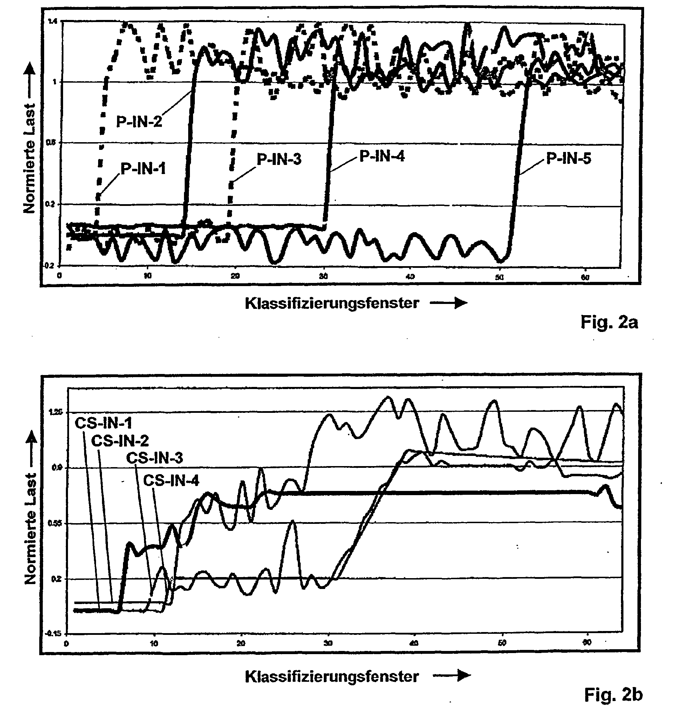

Diese Methode beruht auf der Erkennung eines Musters der Sitzbelegung. Dabei wird der zeitliche Verlauf, beispielsweise der eines Einsitzmusters der Messgröße m(t) und/oder des Schwerpunktvektors (x, y)(t).betrachtet. Mit Einsitzmuster ist hier die zeitabhängige Messgröße m(t) oder die Fouriertransformierte eines solchen Verlaufs gemeint. Die Messgrößen m(t) müssen nicht als absolute Massen bekannt sein. Stattdessen wird eine zwischen 0 und 1 normierte Last eingesetzt. Erwachsene und Kindersitze erzeugen typische Einsitzmuster, die in den Diagrammen Fig. 2a und Fig.

2b dargestellt sind. Als Klassifizierungsfenster werden die Daten m(t) der letzten 64 Sekunden (nach Start der Messung) herangezogen. Bei einer typischen Abtastrate von 1sec also 64 Abtastzeitpunkte. Diese Abtastzeitpunkte bilden in den Diagrammen das Klassifizierungsfenster (Abszissenachse). Dagegen aufgetragen sind die normierten Lasten (Ordinatenachse). Die Kurven in den Diagrammen sind das Ergebnis rechnerischer Simulationen, in die Messdaten aus Versuchsreihen mit einer Vielzahl von Kindersitzen und verschiedenen erwachsenen Personen eingeflossen sind. Die Kurven geben dadurch sehr realitätsnahe Abbilder der tatsächlichen Praxis der Sitzbelegung wider. Das neuronale Netz wurde an diesen Belegungsmustern getestet und daraus Korrelationskoeffizienten errechnet. Als Ergebnis ergeben sich Aussagen wie beispielsweise "9% Korrelation mit einer Person und 87% Korrelation mit einem Kindersitz", trotz durch Signalrauschen (Laufen des Fahrzeugmotors, Fahrwerksunruhe, u.a.) verursachten Störungen.

Diagramm 2a zeigt typische Einsitzmuster für das Belegen eines Sitzes für fünf verschiedene Personen P-IN-1, P-IN-2, P-IN-3, P-IN-4, P-IN-5. Die jeweilige Person öffnet die Fahrzeugtür, setzt sich hin und schnallt den Sicherheitsgurt fest. Die Klassifizierung ist drei Sekunden nach Beendigung des Einsitzvorgangs abgeschlossen. Dabei werden die im Klassifizierungsfenster fehlenden Daten durch rückwärtiges Ergänzen des ersten erfassten Wertes aufgefüllt, so dass das Fenster stets mit 64 Werten gefüllt ist. Das Klassifizierungsfenster ändert sich im Sinne des Schieberegisters, die sich daraus ergebende jeweilige Klassifizierung verläuft dann in einem prinzipiellen Beispiel wie folgt (die rückwärtig ergänzten Werte sind kursiv dargestellt):

| $t_i$ mit i= | m [kg] | Schieberegister (Messwerte sind nicht kursiv) | Klasse $k(t_i)$ | **Konfidenz** Klasse Person [%] |
|---|---|---|---|---|
| 0 | 0 | (*0, 0, ... , 0*, 0) | k(0)= KONSTANT-UNBELEGT | 0 |
| 1 | 78 | (*0, ... 0,0,0*,78) | k(1)=PERSON | 1.5 |
| 2 | 69 | (*0, ... 0,0,0*,78,69) | k(2)= PERSON | 3 |
| 3 | 74 | (*0, ... 0,0,0*,78,69,74) | k(3)= PERSON | 4.7 |
| j | 63 | (*0, ... ,0,0*,78,69,74, ... ,63) | k(j)=PERSON | 1.58 * j |
| 62 | 68 | (*0*, 0,78,69,74, ... ,63, ... ,68) | k(62)= PERSON | 98 |
| 63 | 73 | (0,78,69,74, ... ,63, ... , 68,73) | k(63)= PERSON | 100 |
| 64 | 70 | (78,69,74, ... ,63, ... , 68,73,70) | k(64)= KONSTANT-BELEGT | 100 |
| 65 | 65 | (69,74, ... ,63, ... , 68,73,70,65) | k(65)= KONSTANT-BELEGT | 100 |

Bei der Angabe der Konfidenz (letzte Spalte der Tabelle) wurde vorausgesetzt, dass zu allen Zeitpunkten die Klassifizierung PERSON erfolgte. Lag zu bestimmten Zeiten eine andere Klassifizierung vor, z.B. KINDERSITZ oder NICHT KLASSIFIZIERBAR, so erreicht die Konfidenz nicht 100%. Im Extremfall einer ständigen Umklassifizierung verbleibt die Konfidenz bei 0%.

Es ergibt sich also eine fortwährende Erhärtung der Klassifizierung während der Zeitspanne $t_i$ (i=1...64), die das Klassifizierungsfenster füllt. Um die Einstufung "KONSTANT" im weiteren Verlauf zu erhalten, werden, nachdem zunächst ungefilterte Messwerte {m} in den Klassifikationsalgorithmus eingegeben wurden, anschließend gefilterte Werte {M} eingespeist, um eine Umklassifikation durch verrauschte Signale zu unterdrücken. Dabei wird ausgenutzt, dass ein neuronales Netz bei entsprechender Auslegung automatisch filtert, d.h. "KONSTANT-PERSON" ist das Erkennen einer konstanten Last im Mittel, auch mit einem eingebrachten Rauschniveau.

Deutlich erkennbar ist in Diagramm 2a bei allen Einsitzkurven jeweils eine "scharf" abgegrenzte Stufe mit einem großen Massensprung und einer Steigung von bis zu 100kg/sec. Diese Stufe wird dem neuronalen Netz als Erkennungsmerkmal für eine Person eingegeben.

In Fig. 2b ist ein Verlaufsdiagramm für den Einsitzvorgang für vier verschiedene Kindersitze (ohne Kind), CS-IN-1, CS-IN-2, CS-IN-3, CS-IN-4, dargestellt. Die folgende Tabelle als Beispiel zeigt zwei typische Klassifizierungsverläufe:

| Verlauf CS-IN-1 | Verlauf CS-IN-2 |
|---|---|
| k(0) ... k(6)= KONSTANT-UNBELEGT | k(0) ... k(12)= KONSTANT-UNBELEGT |

Tabelle fortgesetzt

| Verlauf CS-IN-1 | Verlauf CS-IN-2 |
|---|---|
| k(7) = NICHT-KLASSIFIZIERBAR | k(13) = NICHT-KLASSIFIZIERBAR |
| k(8) = KINDERSITZ | k(14) ... k(16)= PERSON |
| k(9) = KINDERSITZ | k(17) ... k(29) = KINDERSITZ |
| k(11) = KINDERSITZ | k(30)= PERSON |
| k(12) ... k(25) = KINDERSITZ | k(31) ... k(62) = KINDERSITZ |
| k(26) ... k(63) = KONSTANT-BELEGT | k(63) = KINDERSITZ |
| k(64) = KONSTANT-BELEGT | k(64) = KONSTANT-BELEGT |
| k(65) = KONSTANT-BELEGT | k(65) = KONSTANT-BELEGT |
| Konfidenzgrad: 93 % | Konfidenzgrad: 62 % |

Das Diagramm 2b zeigt differenziertere Kurvenverläufe im Vergleich zu Diagramm 2a. Insbesondere fällt auf, dass der Kindersitz-Einsitzvorgang im Verlauf zeitweise das Personenmuster enthält. Dies wird daher bei der Eingabe der Parameter für das neuronale Netzwerk ausdrücklich zugelassen. Als Erkennungsmerkmale für einen Kindersitz werden dem neuronalen Netz mehrere zeitlich aufeinanderfolgende Anteile eingegeben:

- Einbringen des Kindersitzes ohne Kind: Masse ändert sich rasch auf ein relativ niedriges Niveau und ist dann zeitweise nahezu konstant,
- Anziehen der Gurte mit einem oder mehreren Versuchen (hohe Last), stark verrauschtes Signal durch Knie aufstemmen, anschließend nahezu linearer Anstieg mit etwa 10 kg/sec,
- Langsamer exponentieller Abfall der maximal erreichten Kraft auf ein um ca. 10% abgesenktes Gleichgewichtsniveau durch sogenanntes Gurtkrafteinlaufen.

Für das Einsitzen des Kindes in den installierten Kindersitz und für das Aussitzen, können auf gleiche Weise weitere Diagramme und Muster erstellt werden. Diese spielen bei der Klassifizierung jedoch nur eine ergänzende, untergeordnete Rolle.

Anhand der von dem neuronalen Netz erlernten Merkmale sind dann letztlich insgesamt die Unterscheidungsmöglichkeiten:

KONSTANT,
PERSON,
KINDERSITZ,
NICHT KLASSIFIZIERBAR und/oder
AUSSITZEN,

als Wahrscheinlichkeiten gegeben, mit denen eine sichere und zuverlässige Identifizierung der Art der Sitzbelegung erfolgt.

**Patentansprüche**

1. Verfahren zur Identifikation der Art der Belegung einer Auflagefläche, insbesondere eines Kraftfahrzeugsitzes (2), mit Hilfe kraftsensorgestützter Signale, **dadurch gekennzeichnet, dass** die zu vorgegebenen Zeitpunkten $t_i$ registrierten Sensorsignale $s_i$ oder aus diesen abgeleitete Größen fortlaufend so in einem Speicher (4) abgespeichert werden, dass zu jedem Zeitpunkt die Sensorsignale $s_i$ oder die aus diesen abgeleiteten Größen jeweils aus der letzten Vergangenheit zur Auswertung zur Verfügung stehen, und dass aus diesen abgespeicherten Werten mittels mindestens zweier unabhängiger Rechenmethoden oder mittels eines neuronalen Netzes auf die Art der Belegung geschlossen wird.

2. Verfahren nach Anspruch 1, **dadurch gekennzeichnet, dass** die Belegung des Kraftfahrzeugsitzes (2) durch eine erwachsene Person von der Belegung mit einem Kindersitz und einem Kind unterschieden wird.

3. Verfahren nach Anspruch 1 oder 2, **dadurch gekennzeichnet, dass** die Registrierung der Sensorsignale $s_i$ oder

der aus diesen abgeleiteten Größen über ein externes Startsignal gestartet wird.

4. Verfahren nach Anspruch 3, **dadurch gekennzeichnet, dass** das externe Startsignal vom Öffnen einer Fahrzeugtür geliefert wird, und dass die fortlaufende Registrierung der Sensorsignale $s_i$ oder der aus diesen abgeleiteten Größen mindestens bis zur Beendigung eines Einsitzvorganges erfolgt.

5. Verfahren nach einem der Ansprüche 1 bis 4, **dadurch gekennzeichnet, dass** durch eine fortlaufende Registrierung und Auswertung der Sensorsignale $s_i$ oder der aus diesen abgeleiteten Größen die Art der Belegung kontinuierlich überwacht wird.

6. Verfahren nach einem der Ansprüche 1 bis 5, **dadurch gekennzeichnet, dass** die registrierten Sensorsignale $s_i$ oder die aus diesen abgeleiteten Größen in einem Schieberegister abgespeichert werden.

7. Verfahren nach Anspruch 6, **dadurch gekennzeichnet, dass** mindestens folgende Schritte durchgeführt werden:

(a) Auslesung der Sensorsignale $s_i$ zu den Zeitpunkten $t_i$, i =1...n , mit einer Schieberegisterspeicherzahl n aus dem Schieberegister, Bildung von Messgrößen für eine Belegungsmasse $m(t_i)$ und einen Ort des Schwerpunkts $(x,y)(t_i)$, Einspeichern der Messgrößen in das Schieberegister, Löschen des ersten Wertes und Schieben des Schieberegisters um einen Schritt,
(b) Klassifizierung der Sitzbelegung anhand von, mittels der mindestens zwei Rechenmethoden oder mittels des neuronalen Netzes, ermittelten Belegungswahrscheinlichkeiten $W_k (t_i)$ aus dem Inhalt des Schieberegisters nach einer Mehrzahl von Klassifizierungszuständen,
(c) Berechnung von Belegungsklassen k = p für eine Belegung durch eine Person und k = cs für eine Belegung mit einem Kindersitz, die einer Belegungswahrscheinlichkeitsbedingung $W_k (t_i) > W_{lim}$, mit einem Wahrscheinlichkeitsgrenzwert $W_{lim}$ genügen und Speicherung der Werte in einem Klassifizierungsfenster,
(d) Auszählung des Klassifizierungsfensters der letzten n Werte von n an in die Vergangenheit und Eingabe der Werte in einen Konfidenzalgorithmus,
(e) Durchführung des Konfidenzalgorithmus,
(f) Wiederholung der Schritte (a) bis (e), bis ein Konfidenzkoeffizient $C_k > C_{lim}$, $C_{lim}$ :Konfidenzgrenzwert, ermittelt ist oder Abbruch nach einer Abbruchbedingung,
(g) Festschreiben der Belegungsklasse k anhand des berechneten Konfidenzkoeffizienten $C_k$ für diese Klasse,
(h) Bereitstellung eines Steuersignals in Abhängigkeit der festgeschriebenen Belegungsklasse k.

8. Verfahren nach Anspruch 7, **dadurch gekennzeichnet, dass** die Klassifizierung nach mindestens den vier Klassifizierungszuständen:

(A) KONSTANT,
(B) UNBELEGT,
(C) PERSON,
(D) KINDERSITZ,

erfolgt.

9. Verfahren nach Anspruch 7 oder 8, **dadurch gekennzeichnet, dass** der Konfidenzalgorithmus durchgeführt wird, durch Berechnung des Konfidenzkoeffizienten nach der Gleichung $C_k = N_k /n$, für die Klassen k = p und k = cs aus der jeweiligen Anzahl $N_k$ von jeweils hintereinander folgenden Belegungsklassen p und cs , die der Bedingung $W_k (t_i) > W_{lim}$ genügen, unter Berücksichtigung der Randbedingungen:

(a) Verringerung des Konfidenzkoeffizienten nach der Gleichung $C_k =(N_k -1)/n$, wenn zu einen Zeitpunkt $t_i$ eine Umklassifizierung stattfindet oder wenn eine Einstufung "NICHT KLASSIFIZIERBAR" erfolgt,
(b) Löschung einer Vorbelegung des Klassifizierungsfensters und setzen von $C_k = 0$, wenn der Klassifizierungszustand "UNBELEGT" festgestellt wird,

Ausgabe von $C_k$, wenn der Klassifizierungszustand "KONSTANT" festgestellt wird.

10. Verfahren nach einem der Ansprüche 7 bis 9, **dadurch gekennzeichnet, dass** die Schieberegisterspeicherzahl n = 64 beträgt.

11. Verfahren nach einem der Ansprüche 7 bis 10, **dadurch gekennzeichnet, dass** der Wahrscheinlichkeitsgrenzwert $W_{lim}$ = 0,9 beträgt.

12. Verfahren nach einem der Ansprüche 6 bis 10, **dadurch gekennzeichnet, dass** der Konfidenzgrenzwert $C_{lim}$ = 0,75 beträgt.

13. Verfahren nach einem der Ansprüche 1 bis 12, **dadurch gekennzeichnet, dass** ein dem Kraftfahrzeugsitz (2) zugeordnetes Airbägsystem (7) über das Steuersignal deaktiviert wird, wenn die Belegungsklasse k = cs ermittelt wird, und dass das Airbagsystem aktiviert wird, wenn die Belegungsklasse k = p ermittelt wird.

14. Verfahren nach einem der Ansprüche 1 bis 12, **dadurch gekennzeichnet, dass** das dem Kraftfahrzeugsitz (2) zugeordnete Airbagsystem (7) über das Steuersignal derart aktiviert wird, dass es im Auslösungsfall mit einer verminderten Druckkraft aufgeblasen wird, wenn die Belegungsklasse k = cs ermittelt wird, und dass das Airbagsystem (7) im Auslösungsfall mit voller Druckkraft aufgeblasen wird, wenn die Belegungsklasse k = p ermittelt wird.

15. Verfahren nach einem der Ansprüche 1 bis 14, **dadurch gekennzeichnet, dass** die Belegungsmasse $m(t_i)$, die als Belegung des Kraftfahrzeugsitzes (2) gemessen wird, mit einer vorgegebenen Mindestbelegungsmasse $m_{pmin}$ verglichen wird, und dass das Vergleichsergebnis bei der Klassifizierung berücksichtigt wird.

16. Verfahren nach Anspruch 15, **dadurch gekennzeichnet, dass** die Mindestbelegungsmasse $m_{pmin}$ = 32,5kg beträgt.

17. Verfahren nach einem der Ansprüche 1 bis 16, **dadurch gekennzeichnet, dass** während des Fahrbetriebes des Kraftfahrzeuges durch Fahreffekte verursachte und auf den Kraftfahrzeugsitz (2) einwirkende, über die Sensorsignale $s_i$ registrierte, Beschleunigungskräfte bei der Klassifizierung berücksichtigt werden.

18. Verfahren nach einem der Ansprüche 1 bis 17, **dadurch gekennzeichnet, dass** Einwirkungen durch Gegenstände, die sich unterhalb des Kraftfahrzeugsitzes (2) befinden und die Kräfte auf den Kraftfahrzeugsitz (2) ausüben und die Sensorsignale $s_i$ beeinflussen, bei der Klassifizierung berücksichtigt werden.

19. Verfahren nach einem der Ansprüche 1 bis 18, **dadurch gekennzeichnet, dass** durch Langzeiteffekte auftretende Messgrößenänderungen $\delta m, \delta x, \delta y$ bei der Klassifizierung berücksichtigt werden.

20. Verfahren nach einem der Ansprüche 1 bis 19, **dadurch gekennzeichnet, dass** die Belegungserkennung eines Kraftfahrzeugsitzes auf einer Erkennung eines für die Art der Sitzbelegung charakteristischen Sitzbelegungsmusters anhand der Auswertung der Speicherinhalte mit Hilfe des neuronalen Netzes beruht.

21. Verfahren nach Anspruch 20, **dadurch gekennzeichnet, dass** das neuronal Netz mindestens folgende Schritte beinhaltet:

   (a) Eingabe von zeitlichen Massenverläufen m(t), wobei keine absoluten Massenwerte, sondern eine normierte Massenskala [0,1] verwendet wird, von Stufenfunktionen und typischen Kindersitzmustern, Erzeugung eines Lemsatzes,
   (b) Einspeisung der aktuellen n Werte aus dem Speicher,
   (c) Berechnung von Ausgabe - Neuronen für Wahrscheinlichkeiten der Belegung mindestens nach den Zuständen:
   KONSTANT,
   PERSON,
   KINDERSITZ,
   NICHT KLASSIFIZIERBAR und/oder
   AUSSITZEN.

22. Verfahren nach einem der Ansprüche 1 bis 19, **dadurch gekennzeichnet, dass** mindestens zwei unabhängige Rechenmethoden vorgesehen sind.

23. Verfahren nach Anspruch 22, **dadurch gekennzeichnet, dass** die Belegungswahrscheinlichkeit $W_k(t_i)$ als eine Gesamtbelegungswahrscheinlichkeit aus den einzelnen eingesetzten Rechenmethoden nach der Gleichung

$$W_k(t_i) = \sum_{j=1}^{u} c_j \cdot W_k^j(t_i),$$ mit $c_j$: Konfidenzfaktor der Methode j, u: Anzahl der Rechenmethoden, ermittelt wird.

**24.** Verfahren nach Anspruch 22 oder 23, **dadurch gekennzeichnet, dass** die erste Rechenmethode auf einer Strukturmerkmalerkeimung der Sitzbelegung anhand der Auswertung der Speicherinhalte mit Hilfe einer Regressionsanalyse beruht, und dass die zweite Rechenmethode auf der Strukturmerkmalerkennung anhand der Auswertung der Speicherinhalte mit Hilfe einer Belegungsentropieanalyse beruht.

**25.** Verfahren nach Anspruch 24, **dadurch gekennzeichnet, dass** die Regressionsanalyse mindestens folgende Schritte beinhaltet:

(a) Ermittlung eines Korrelationskoeffizienten und einer Stufenstelle $t_{step}$, STUFE AUF oder STUFE AB, aus der Analyse der Strukturmerkmale der Sitzbelegung einer Person über n Werte,
(b) Ermittlung eines Korrelationskoeffizienten, einer Steigung in [kg/sec] und einer Stufe in [kg] durch Analyse einer STUFE AUF in der Nähe von $t_{step}$ über eine vorgegebene Zahl von v < n Werten,
(c) Auszählung der Anzahl $N_{step}$ der STUFEN AUF, die über der vorgegebenen Mindestmasse $m_{pmin}$ für einen Erwachsenen liegen,
(d) Berechnung der Belegungswahrscheinlichkeit für eine Person aus der Höhe der Stufe bezogen auf einen Normwert Norm1 und dem Betrag der Steigung bezogen auf einen Normwert Norm2 in einer Memberfunktion nach der Beziehung:

$$W_p = 1/3 * (\text{Stufe} / \text{Norm1}) + 1/3 * (\text{Steigung} / \text{Norm2}) + 1/3 * \delta_{N1},$$

mit $\delta_{N1} = 1$ (für $N_{step} = 1$) und $\delta_{N1} = 0$ (für $N_{step} \neq 1$) und
(e) Prüfung der Strukturmerkmale auf konstante Belegung.

**26.** Verfahren nach Anspruch 24 oder 25, **dadurch gekennzeichnet, dass** die Belegungsentropieanalyse mindestens folgende Schritte beinhaltet:

(a) Normierung der Massenskala auf [0,1],
(b) Aufteilen der normierten Massenskala in z < n Zellen,
(c) Auszählung der Anzahl der Werte $w_i$ für jede Zelle über das Klassifizierungsfenster,

(d) Berechnung der Belegungsentropie nach der Gleichung $S = -\sum_{i=1}^{z} c_i w_i \ln w_i$, mit $c_i$: Gewichtung, negativ in der Nähe von den Skalenenden [0,1], höhere Gewichtung der Zellen zwischen den Skalenenden, Normierung auf eine Gesamtentropie $S_{gesamt}$,
(e) Berechnung der Wahrscheinlichkeiten für die Sitzbelegungen nach den Beziehungen $W_{cs} = S/S_{gesamt} - 1$, mit k = cs fur $S/S_{gesamt} > 1$ und $W_p = 1 - S/S_{gesamt}$, mit k = p für $S/S_{gesamt} < 1$.

**27.** Verfahren nach einem der Ansprüche 22 bis 26, **dadurch gekennzeichnet, dass** als eine zusätzliche Rechenmethode die Strukturmerkmalerkennung der Sitzbelegung mit Hilfe einer Fast-Fourier-Transformations-Analyse der Speicherinhalte vorgesehen ist.

**28.** Verfahren nach einem der Ansprüche 22 bis 27, **dadurch gekennzeichnet, dass** als eine zusätzliche Rechenmethode die Strukturmerkmalerkennung der Sitzbelegung mit Hilfe einer Autokorrelationsanalyse der Speicherinhalte vorgesehen ist.

**29.** Vorrichtung zur Identifikation der Art der Belegung einer Auflagefläche, insbesondere eines Kraftfahrzeugsitzes (2), bei der an der Auflagefläche mindestens drei Kraftsensoren (1) oder mindestens eine Drehachse in Verbindung mit mindestens einem Kraftsensor (1) angeordnet sind, über die, mit einer mit den Kraftsensoren (1) verbundenen Messelektronik (3), auf die Auflagefläche einwirkende Kräfte messbar sind, und bei der, über eine mit der Messelektronik (3) verbundenen Steuereinheit (6), eine Einrichtung in Abhängigkeit der Messwerte ansteuerbar ist, **dadurch**

**gekennzeichnet, dass** die Messelektronik (3) mit einem Speicher (4) verbunden ist, in dem die zu vorgegebenen Zeitpunkten $t_i$ registrierten Sensorsignale $s_i$ oder aus diesen abgeleitete Größen fortlaufend so abspeicherbar sind, dass zu jedem Zeitpunkt die Sensorsignale $s_i$ oder die aus diesen abgeleiteten Größen jeweils aus der letzten Vergangenheit zur Auswertung zur Verfügung stehen, und dass eine Datenverarbeitungseinheit (5) vorgesehen ist, die aus den im Speicher (4) abgespeicherten Werten mittels mindestens zweier unabhängiger Rechenmethoden oder mittels eines neuronalen Netzes die Art der Belegung ermittelt.

30. Vorrichtung nach Anspruch 29, **dadurch gekennzeichnet, dass** der Speicher (4) als ein Schieberegister ausgebildet ist.

31. Vorrichtung nach Anspruch 29 oder 30, **dadurch gekennzeichnet, dass** die ansteuerbare Einrichtung ein Airbagsystem (7) ist.

32. Vorrichtung nach einem der Ansprüche 29 bis 31, **dadurch gekennzeichnet, dass** ein von einer Bordspannungsversorgung eines Kraftfahrzeuges unabhängiger Ergebnisspeicher (8) zur Speicherung der über die Datenverarbeitungseinheit (5) ausgewerteten Daten vorgesehen ist.

**Claims**

1. Method for identification of the kind of occupation of a support surface, particularly of a motor vehicle seat (2), with the help of signals supported by force sensor, **characterised in that** the sensor signals $s_i$ registered at predetermined time instants $t_i$ or magnitudes derived therefrom are continuously stored in a memory (4) in such a manner that at any instant the sensor signals $s_i$ or the magnitudes derived therefrom respectively from the last past occasion are available for evaluation and that the kind of occupation is concluded from these stored values by means of at least two independent computing methods or by means of a neuronal network.

2. Method according to claim 1, **characterised in that** the occupation of the motor vehicle seat (2) by an adult is distinguished from the occupation with a child seat and a child.

3. Method according to claim 1 or 2, **characterised in that** the registration of the sensor signals $s_i$ or the magnitudes derived therefrom is started by way of an external start signal.

4. Method according to claim 3, **characterised in that** the external start signal is delivered by opening a vehicle door and that the continuous registration of the sensor signals $s_i$ or the magnitudes derived therefrom is carried out at least until conclusion of a sitting-down process.

5. Method according to one of claims 1 to 4, **characterised in that** the kind of occupation is continuously monitored by a continuous registration and evaluation of the sensor signals $s_i$ or the magnitudes derived therefrom.

6. Method according to one of claim 1 to 5, **characterised in that** the registered sensor signals $s_i$ or the magnitudes derived therefrom are stored in a shift register.

7. Method according to claim 6, **characterised in that** at least the following steps are carried out:

   (a) reading out of the sensor signal $s_i$ at the time instants $t_i$, i = 1 ... n, with a shift register store number n from the shift register, formation of measurement magnitudes for an occupation mass $m(t_i)$ and a location of the centre of gravity $(x, y)(t_i)$, storage of the measurement magnitudes in the shift register, erasure of the first value and shifting of the shift register by one step,
   (b) classification of the seat occupation on the basis of occupation probabilities $W_k(t_i)$, which are ascertained by means of the at least two computing methods or by means of the neuronal network, from the content of the shift register according to a plurality of classification states,
   (c) computation of occupation classes k = p for occupation by a person and k = cs for occupation by a child seat, which satisfy an occupation probability condition $W_k(t_i) > W_{lim}$, with a probability limit value $W_{lim}$, and storage of the values in a classification window,
   (d) counting out from the classification window the last n values from n to the past occasion and input of the values into a confidence algorithm,
   (e) performance of the confidence algorithm,

(f) repetition of the steps (a) to (e) until a confidence coefficient $C_k > C_{lim}$, wherein $C_{lim}$ is a confidence limit value, is ascertained or until breaking off in accordance with a breaking-off condition,

(g) establishing the occupation class k on the basis of the computed confidence coefficient $C_k$ for this class and

(h) providing a control signal in dependence on the established occupation class k.

8. Method according to claim 7, **characterised in that** the classification takes place according to at least the four classification states:

(A) CONSTANT,
(B) UNOCCUPIED,
(C) PERSON,
(D) CHILD SEAT.

9. Method according to claim 7 or 8, **characterised in that** the confidence algorithm is performed by computation of the confidence coefficient according to the equation $C_k = N_k/n$, for the classes k = p and k = cs, from the respective number $N_k$ of respectively successive occupation classes p and cs satisfying the condition $W_k(t_i) > W_{lim}$, with consideration of the boundary conditions:

(a) reduction of the confidence coefficient according to the equation $C_k = (N_k - 1)/n$ when at a time instant $t_i$ a reclassification is carried out or if a classifying of 'NOT CLASSIFIABLE' takes place,

(b) deletion of a default allocation of the classification window and setting of $C_k = 0$ if the classification state 'UNOCCUPIED' is established and output of $C_k$ if the classification state 'CONSTANT' is established.

10. Method according to one of claims 7 to 9, **characterised in that** the shift register storage number n is 64.

11. Method according to one of claims 7 to 10, **characterised in that** the probability limit value $W_{lim}$ is 0.9.

12. Method according to one of claims 6 to 10, **characterised in that** the confidence limit value $C_{lim}$ is 0.75.

13. Method according to one of claims 1 to 12, **characterised in that** an air bag system (7) associated with the motor vehicle seat (2) is deactivated by way of the control signal when the occupation class k = cs is ascertained and that the air bag system is activated when the occupation class k = p is ascertained.

14. Method according to one of claims 1 to 12, **characterised in that** the air bag system (7) associated with the motor vehicle seat (2) is activated by way of the control signal in such a manner that in the case of triggering it is inflated with a reduced pressure force if the occupation class k = cs is ascertained and that the air bag system (7) in the case of triggering is inflated with full pressure force if the occupation class k = p is ascertained.

15. Method according to one of claims 1 to 14, **characterised in that** the occupation mass $m(t_i)$, which is measured as occupation of the motor vehicle seat (2), is compared with a predetermined minimum occupation mass $m_{p\ min}$ and that the comparison result is taken into consideration in the classification.

16. Method according to claim 15, **characterised in that** the minimum occupation mass $m_{p\ min}$ is 32.5 kg.

17. Method according to one of claims 1 to 16, **characterised in that** during travel operation of the motor vehicle acceleration forces which are caused by travel effects and act on the motor vehicle seat (2) and which are registered by way of the sensor signals $s_i$ are taken into consideration in the classification.

18. Method according to one of claims 1 to 17, **characterised in that** effects by objects, which are located under the motor vehicle seat (2) and which exert forces on the motor vehicle seat (2) and influence the sensor signals $s_i$, are taken into consideration in the classification.

19. Method according to one of claims 1 to 18, **characterised in that** measurement magnitude changes $\delta m$, $\delta x$, $\delta y$ arising due to long-term effects are taken into consideration in the classification.

20. Method according to one of claims 1 to 19, **characterised in that** the occupation recognition of a motor vehicle seat is based on recognition of a seat occupation pattern, which is characteristic for the kind of seat occupation, by way of evaluation of the memory content with the help of the neuronal network.

**21.** Method according to claim 20, **characterised in that** the neuronal network contains at least the following steps:

(a) input of mass courses m(t) over time, wherein use is made not of absolute mass values but of a standardised mass scale [0.1], of step functions and typical child seat patterns, generation of a learning set,
(b) supply of the current n values from the memory,
(c) computation of output neurones for probabilities of the occupation at least according to the states:
CONSTANT,
PERSON,
CHILD SEAT,
NOT CLASSIFIABLE and/or
LEAVING SEAT.

**22.** Method according to one of claims 1 to 19, **characterised in that** at least two independent computing methods are provided.

**23.** Method according to claim 22, **characterised in that** the occupation probability $W_k(t_i)$ is ascertained as an overall occupation probability from the individually used computing methods according to the equation

$$W_k(t_i) = \sum_{j=1}^{u} c_j \cdot W_k^{j}(t_i),$$

wherein $c_j$ is a confidence factor of the method j and u is the number of computing methods.

**24.** Method according to claim 22 or 23, **characterised in that** the first computing method is based on a structural feature recognition of the seat occupation by way of evaluation of the memory content with the help of a regression analysis and that the second computing method is based on the structural feature recognition by way of evaluation of the memory content with the help of an occupation entropy analysis.

**25.** Method according to claim 24, **characterised in that** the regression analysis contains at least the following steps:

a) determination of a correlation coefficient and a step place $t_{step}$, STEP UP or STEP DOWN, from the analysis of the structural features of the seat occupation of a person over n values,
(b) determination of a correlation coefficient, a gradient in [kg/sec] and a step in [kg] by analysis of a STEP UP in the vicinity of $t_{step}$ over a predetermined number of v < n values,
(c) counting the number $N_{step}$ of STEPS UP, which lie over the predetermined minimum mass $m_{pmin}$ for an adult,
(d) computation of the occupation probability for a person from the height of the step referred to a standard value Norm1 and the amount of the gradient referred to a standard value Norm2 in a member function according to the equation:

$$W_p = 1/3 * (Step/Norm1) + 1/3*(Gradient/Norm2) + 1/3*\delta_{N1},$$

wherein $\delta_{N1} = 1$ (for $N_{step} = 1$) and $\delta_{N1} = 0$ (for $N_{step} \neq 1$ and
(e) checking of the structural features for constant occupation.

**26.** Method according to claim 24 or 25, **characterised in that** the occupation entropy analysis contains at least the following steps:

(a) standardisation of the mass scale to [0.1],
(b) division of the standardised mass scale into z < n cells,
(c) counting of the number of values $w_i$ for each cell over the classification window,
(d) computation of the occupation entropy according to the equation

$$S = - \sum_{i=i}^{z} c_i \, w_i \, 1n \, w_i,$$

wherein $c_i$ is a weighting, negative in the vicinity of the scale ends [0.1], higher weighting of the cells between the scale ends, standardisation to an overall entropy $S_{gesamt}$,
(e) computation of the probabilities for the seat occupations according to the equations

$$W_{cs} = S/S_{gesamt} -1,$$

wherein k = cs for $S/S_{gesamt} > 1$ and

$$W_P = 1 - S/S_{gesamt},$$

wherein k = p for $S/S_{gesamt} < 1$.

27. Method according to one of claims 22 to 26, **characterised in that** the structural feature recognition of the seat occupation with the help of a Fast Fourier Transformation analysis of the memory content is provided as an additional computing method.

28. Method according to one of claims 22 to 27, **characterised in that** the structural feature recognition of the seat occupation with the help of an autocorrelation analysis of the storage content is provided as an additional computing method.

29. Device for identification of the kind of occupation of a support surface, particularly a motor vehicle seat (2), in which at least three force sensors (1) or at least one rotational axle in connection with at least one force sensor (1) are or is arranged at the support surface, by way of which forces acting on the support surface are measurable by a measuring electronic system (3) connected with the force sensors (1), and in which a device is controllable in drive by way of a control unit (6), which is connected with the measuring electronic system (3), in dependence on the measurement values, **characterised in that** the measuring electronic system (3) is connected with a memory (4) in which the sensor signals $s_i$ registered at predetermined time instants $t_i$ or magnitudes derived therefrom can be continuously stored in such a manner that at any instant the sensor signals $s_i$ or the magnitudes derived therefrom are available from the last past occasion for evaluation and that a data processing unit (5) is provided, which ascertains the kind of occupation from the values, which are stored in the memory (4), by means of at least two independent computing methods or at least one neuronal network.

30. Device according to claim 29, **characterised in that** the memory (4) is constructed as a shift register.

31. Device according to claim 29 or 30, **characterised in that** the device controllable in drive is an air bag system (7).

32. Device according to one of claims 29 to 31, **characterised in that** a results memory (8), which is independent of an on-board voltage supply of a motor vehicle, for storage of the data evaluated by way of the data processing unit (5) is provided.

**Revendications**

1. Procédé pour l'identification du type d'occupation d'une surface de contact, en particulier d'un siège de véhicule automobile (2), grâce à des signaux provenant d'un capteur dynamométrique, **caractérisé en ce que** les signaux de détection $S_i$ enregistrés à des instants $t_i$ prédéfinis ou les grandeurs déduites à partir de ceux-ci, alimentent une mémoire (4) en continu de manière à ce qu'à chaque instant, les signaux de détection $S_i$ ou les grandeurs déduites à partir de ces signaux, sont respectivement disponibles pour le passé le plus récent pour une évaluation, et **en ce qu'**à partir de ces valeurs stockées en.mémoire, on en déduit le type d'occupation à l'aide d'au moins deux méthodes de calcul indépendantes, ou bien à l'aide d'un réseau neuronal.

**2.** Procédé selon la revendication 1, **caractérisé en ce que** l'on distingue l'occupation du siège de véhicule automobile (2) par un adulte, de l'occupation d'un siège pour enfants et par un enfant.

**3.** Procédé selon les revendications 1 ou 2, **caractérisé en ce que** l'enregistrement des signaux de détection Si ou des grandeurs déduites à partir de ceux-ci, est mis en route via un signal de démarrage externe.

**4.** Procédé selon la revendication 3, **caractérisé en ce que** le signal de démarrage externe est délivré grâce à l'ouverture d'une portière de véhicule, et **en ce que** l'enregistrement en continu des signaux de détection $s_i$ ou des grandeurs déduites à partir de ceux-ci, s'effectue au moins jusqu'à la fin d'un processus d'occupation.

**5.** Procédé selon l'une quelconque des revendications 1 à 4, **caractérisé en ce que** grâce à un enregistrement et à une analyse en continu des signaux de détection $s_i$ ou bien des grandeurs déduites à partir de ceux-ci, le type d'occupation est surveillé de manière continue.

**6.** Procédé selon l'une quelconque des revendications 1 à 5, **caractérisé en ce que** les signaux de détection $s_i$ enregistrés ou bien les grandeurs déduites à partir de ceux-ci, sont mis en mémoire dans un registre à décalage.

**7.** Procédé selon la revendication 6, **caractérisé en ce que** l'on effectue au moins les étapes suivantes :

a) extraction des signaux de détection $s_i$ aux instants $t_i$, $i=1... n,$ avec un nombre de mémoire de registre à décalage $n$ du registre à décalage, formation de grandeurs mesurées pour une masse d'occupation $m(t_i)$ et d'un emplacement de centre de gravité $(x, y)$ $(t_i)$, mise en mémoire des grandeurs mesurées dans le registre à décalage, effacement de la première valeur et décalage du registre à décalage d'un pas,
b) classification de l'occupation du siège à l'aide des probabilités d'occupation $W_k(t_i)$ déterminées à l'aide au moins des deux méthodes de calcul ou à l'aide du réseau neuronal, à partir du contenu du registre à décalage, selon une pluralité d'états de classification,
c) calcul de classes d'occupation k=p pour une occupation par une personne et k=cs pour une occupation d'un siège pour enfants, qui satisfont à une condition de probabilité d'occupation $W_k(t_i)>W_{lim}$ avec une valeur de seuil de probabilité $W_{lim}$ et enregistrement des valeurs dans une fenêtre de classification,
d) comptage de la fenêtre de classification des dernières valeurs de $n$, à partir de $n$ jusque dans le passé, et introduction des valeurs dans un algorithme de confiance,
e) exécution de l'algorithme de confiance,
f) répétition des étapes a) à e) jusqu'à ce qu'un coefficient de confiance $C_k > C_{lim}$ avec $C_{Lim}$ : valeur limite de confiance, soit déterminé, ou bien interruption selon une condition d'interruption,
g) enregistrement de la classe d'occupation k à l'aide du coefficient de confiance $C_k$ calculé pour cette classe,
h) mise à disposition d'un signal de commande en fonction de la classe d'occupation $k$ enregistrée.

**8.** Procédé selon la revendication 7, **caractérisé en ce que** la classification s'effectue selon au moins les quatre états de classification :

A) CONSTANT
B) NON OCCUPE
C) PERSONNE
D) SIEGE ENFANT.

**9.** Procédé selon les revendications 7 ou 8, **caractérisé en ce que** l'algorithme de confiance est exécuté en calculant le coefficient de confiance selon l'équation $C_k = N_k/n$, pour les classes k=p et k=cs à partir du nombre $N_k$ respectif de classes d'occupation p et cs respectivement successives, qui satisfont à la condition $W_k(ti)>W_{lim}$, en tenant compte des conditions additionnelles :

a) diminution du coefficient de confiance selon l' équation $C_k = (N_k-1)/n$, lorsqu'à un instant $t_i$ un changement de classification a lieu, ou lorsqu'un classement en « NON CLASSIFIABLE » a lieu,
b) effacement d'une pré-affectation de la fenêtre de classification et établissement de $C_k=0$ lorsque l'état de classification « NON OCCUPE » est constaté,

délivrance de $C_k$ lorsque l'état de classification « CONSTANT » est constaté.

**10.** Procédé selon l'une quelconque des revendications 7 à 9, **caractérisé en ce que** le nombre de mémoire du registre à décalage n = 64.

**11.** Procédé selon l'une quelconque des revendications 7 à 10, **caractérisé en ce que** la valeur limite de probabilité $W_{lim} = 0,9$.

**12.** Procédé selon l'une quelconque des revendications 6 à 10, **caractérisé en ce que** la valeur limite de confiance $C_{lim} = 0,75$.

**13.** Procédé selon l'une quelconque des revendications 1 à 12, **caractérisé en ce qu'**un système d'Airbag (7) affecté au siège de véhicule automobile (2) est désactivé par l'intermédiaire du signal de commande, lorsque la classe d'occupation k=cs est déterminée, et **en ce que** le système d'Airbag est activé lorsque la classe d'occupation k=p est déterminée.

**14.** Procédé selon l'une quelconque des revendications 1 à 12, **caractérisé en que** le système d'Airbag (7) affecté au siège de véhicule automobile (2) est activé via le signal de commande de manière à ce qu'il se gonfle avec une force de pression réduite en cas de déclenchement, lorsque la classe d'occupation k=cs est déterminée, et en ce que le système d'Airbag (7) est gonflé avec une force de pression pleine en cas de déclenchement, lorsque la classe d'occupation k=p est déterminée.

**15.** Procédé selon l'une quelconque des revendications 1 à 14, **caractérisé en ce que** la masse d'occupation $m(t_i)$, laquelle est mesurée en tant qu'occupation du siège de véhicule automobile (2), est comparée avec une masse d'occupation minimale $m_{pmin}$ prédéfinie, et **en ce que** le résultat de comparaison est pris en compte lors de la classification.

**16.** Procédé selon la revendication 15, **caractérisé en ce que** la masse d'occupation minimale $m_{pmin} = 32,5$ kg.

**17.** Procédé selon l'une quelconque des revendications 1 à 16, **caractérisé en ce que** lors de la conduite du véhicule automobile, on tient compte de forces d'accélération lors de la classification, lesquelles sont enregistrées via les signaux de détection $s_i$ et sont générées par des effets de la conduite et agissent sur le siège de véhicule automobile (2).

**18.** Procédé selon l'une quelconque des revendications 1 à 17, **caractérisé en ce que** des influences dues à des objets se trouvent en dessous du siège du véhicule automobile (2) et qui exercent des forces sur le siège de véhicule automobile (2) et influencent les signaux de détection $s_i$, sont pris en compte lors de la classification.

**19.** Procédé selon l'une quelconque des revendications 1 à, 18, **caractérisé en ce que** des variations des grandeurs mesurées δm, δx, δy apparaissant en raison d'effets à long terme, sont prises en compte lors de la classification.

**20.** Procédé selon l'une quelconque des revendications 1 à 19, **caractérisé en ce que** la reconnaissance de l'occupation d'un siège de véhicule automobile repose sur la reconnaissance d'un motif d'occupation de siège caractéristique pour le type d'occupation du siège, grâce à l'analyse du contenu de la mémoire à l'aide du réseau neuronal.

**21.** Procédé selon la revendication 20, **caractérisé en ce que** le réseau neuronal comprend au moins les étapes suivantes :

a) saisie des variations de la masse dans le temps m(t), sachant que l'on n'utilise pas des valeurs absolues de la masse, mais une échelle des masses normée [0,1], de fonctions discontinues et de motifs de sièges d'enfants typiques, génération d'un principe adaptatif,
b) enregistrement des valeurs *n* actuelles à partir de la mémoire,
c) calcul des neurones de sortie pour des probabilités d'occupation au moins selon les états :
CONSTANT,
PERSONNE,
SIEGE ENFANT,
NON CLASSIFIABLE et/ou
OCCUPATION.

**22.** Procédé selon l'une quelconque des revendications 1 à 19, **caractérisé en ce que** au moins deux méthodes de calcul indépendantes sont prévues.

**23.** Procédé selon la revendication 22, **caractérisé en ce que** la probabilité d'occupation $W_k(t_i)$ est déterminée comme étant une probabilité d'occupation globale à partir des méthodes de calcul individuelles utilisées selon l'équation

$$W_k(t_i) = \sum_{j=1}^{u} c_j . W_k^j(t_i)$$

avec $C_j$ : facteur de confiance de la méthode j, et u : nombre de méthodes de calcul.

**24.** Procédé selon les revendications 22 ou 23, **caractérisé en ce que** la première méthode de calcul repose sur une reconnaissance des caractéristiques de structure de l'occupation du siège grâce à l'analyse du contenu de la mémoire à l'aide d'une analyse de régression, et **en ce que** la deuxième méthode de calcul repose sur la reconnaissance des caractéristiques de structure grâce à l'analyse du contenu de la mémoire à l'aide d'une analyse de l'entropie d'occupation.

**25.** Procédé selon la revendication 24, **caractérisé en ce que** l'analyse de régression comprend au moins les étapes suivantes :

a) détermination d'un coefficient de corrélation et d'un niveau d'échelonnement $t_{step}$ : ECHELON VERS LE HAUT ou ECHELON VERS LE BAS, à partir de l'analyse des caractéristiques de structure de l'occupation du siège par une personne pour *n* valeurs,
b) détermination d'un coefficient de corrélation, d'un gradient en [kg/sec] et d'un échelon en [kg] grâce à l'analyse d'un ECHELON VERS LE HAUT à proximité de $t_{step}$ pour une quantité prédéfinie de valeurs v < n,
c) comptage du nombre $N_{step}$ des ECHELONS VERS LE HAUT, lesquels se situent au-dessus de la masse minimale $m_{pmin}$ pour un adulte,
d) calcul de la probabilité d'occupation pour une personne à partir du niveau de l'échelon par rapport à une valeur normale Norm1 et à partir de la valeur du gradient par rapport à la valeur normale Norm2 dans une fonction à membres selon le rapport :

```
Wp = 1/3*(échelon/Norm1)+1/3*(gradient/Norm2)+1/3*δN1,
```

où $\delta_{N1} = 1$ (pour $N_{step} = 1$) et où $\delta_{N1} = 0$ (pour $N_{step} \neq 1$) et
e) vérification des caractéristiques de structure pour une occupation constante.

**26.** Procédé selon les revendications 24 ou 25, **caractérisé en ce que** l'analyse de l'entropie d'occupation comprend au moins les étapes suivantes :

a) réduction de l'échelle des masses à [0,1],
b) partage de l'échelle des masses réduite en z<n cellules,
c) comptage du nombre de valeurs $W_i$ pour chaque cellule via la fenêtre de classification,
d) calcul de l'entropie d'occupation d'après l'équation

$$S = -\sum_{i=1}^{z} c_i w_i \ln w_i$$

avec $C_i$ : pondération, négative à proximité des extrémités d'échelle [0,1], pondération plus élevée des cellules entre les extrémités d'échelle, réduction à une entropie globale de $S_{gesamt}$,
e) calcul des probabilités pour les occupations de sièges d'après les rapports $W_{cs} = S/S_{gesamt}-1$, avec k=cs pour $S/S_{gesamt} > 1$ et $W_p = 1 - S/S_{gesamt}$, avec k=p pour $S/S_{gesamt} < 1$.

**27.** Procédé selon l'une quelconque des revendications 22 à 26, **caractérisé en ce que** l'on prévoit en tant que méthode de calcul additionnelle, la reconnaissance des caractéristiques de structure de l'occupation du siège à l'aide d'une analyse de transformation de Fourier rapide du contenu de la mémoire.

28. Procédé selon l'une quelconque des revendications 22 à 27, **caractérisé en que** l'on prévoit en tant que méthode de calcul supplémentaire, la reconnaissance des caractéristiques de structure de l'occupation du siège à l'aide d'une analyse d'auto corrélation du contenu de la mémoire.

29. Dispositif pour l'identification du type d'occupation d'une surface de contact, en particulier d'un siège de véhicule automobile (2), pour lequel au moins trois capteurs dynamométriques (1) ou bien au moins un axe de rotation en liaison avec au moins un capteur dynamométrique (1) sont disposés sur la surface de contact, via lesquels capteurs il est possible de mesurer des forces agissant sur la surface de contact à l'aide d'une électronique de mesure (3) en liaison avec les capteurs dynamométriques (1), et pour lequel il est possible de déclencher un dispositif en fonction des valeurs mesurées à l'aide d'une unité de commande (6) en liaison avec l'électronique de mesure (3), **caractérisé en ce que** l'électronique de mesure (3) est en liaison avec une mémoire (4), dans laquelle il est possible d'enregistrer en continu les signaux de détection Si enregistrés à des instants $t_i$ prédéfinis ou bien des grandeurs déduites à partir de ces signaux, de manière à ce qu'à chaque instant, les signaux de détection Si ou bien les grandeurs déduites à partir de ceux-ci sont à disposition pour analyse respectivement pour le passé le plus récent, et **en ce qu'**une unité de traitement des données (5) est prévue, laquelle détermine le type d'occupation à partir des valeurs enregistrées dans la mémoire (4), à l'aide d'au moins deux méthodes de calcul indépendantes, ou bien à l'aide d'un réseau neuronal.

30. Dispositif selon la revendication 29, **caractérisé en ce que** la mémoire (4) est réalisée en tant que registre à décalage.

31. Dispositif selon les revendications 29 ou 30, **caractérisé en ce que** le dispositif pouvant être déclenché est un système d'Airbag (7).

32. Dispositif selon l'une quelconque des revendications 29 à 31, **caractérisé en ce qu'**une mémoire de résultat (8) indépendante de l'alimentation en tension de bord d'un véhicule automobile est prévue pour la mise en mémoire des données analysées grâce au dispositif de traitement des données (5).

**Fig. 1**

Fig. 2a

Fig. 2b